# FASCICULE DE BREVET EUROPEEN

(11) **EP 0 698 957 B1**
(45) Date de publication et mention de la délivrance du brevet: **07.01.1998**
(21) Numéro de dépôt: 95112758.8
(22) Date de dépôt: 14.08.1995
(51) Int. Cl.: H02K 16/02, G04C 3/14

(54) **Transducteur électromécanique comportant deux rotors**
Electromechanischer Wandler mit zwei Rotoren
Electromechanical transducer having two rotors

(30) Priorité: 26.08.1994 CH 2618/94; 02.09.1994 FR 9410546
(43) Date de publication de la demande: 28.02.1996
(73) Titulaire: Eta SA Fabriques d'Ebauches, 2540 Grenchen (CH)
(72) Inventeur: Taghezout, Daho, CH-1025 St-Sulpice (CH); Guérin, Yves, CH-2540 Grenchen (CH)
(74) Mandataire: Patry, Didier Marcel Pierre

(56) Documents cités:
- EP-A- 0 092 521
- EP-A- 0 143 227
- EP-A- 0 217 164
- EP-A- 0 393 606

## Description

La présente invention concerne un transducteur électromécanique comprenant deux rotors, notamment un moteur du type horloger.

Le but de la présente invention est de fournir un transducteur électromécanique, notamment du type horloger, comprenant deux rotors pouvant être, de manière relativement aisée, commandés indépendamment l'un de l'autre dans les deux sens de rotation possibles.

A cet effet, la présente invention concerne un transducteur électromécanique comprenant :
- un stator définissant un premier trou statorique et un deuxième trou statorique,
- un premier rotor et un deuxième rotor montés rotatifs et traversant respectivement les premier et deuxième trous statoriques, chacun de ces premier et deuxième rotors comportant un aimant permanent couplé magnétiquement audit stator.

Un tel moteur selon l'art antérieur est décrit dans le document EP-A-0 092 521.

Ce transducteur électromécanique est caractérisé en ce que chacun des premier et deuxième trous statoriques est défini par un premier pôle statorique, un deuxième pôle statorique et un troisième pôle statorique, lesdits premier et deuxième pôles statoriques définissant partiellement le premier trou statorique étant reliés magnétiquement par des premiers moyens de guidage du flux magnétique, les premier et deuxième pôles statoriques définissant partiellement le deuxième trou statorique étant reliés magnétiquement par des deuxièmes moyens de guidage du flux magnétique. Les premiers et deuxièmes moyens de guidage du flux magnétique sont respectivement associés à des premiers et deuxièmes moyens d'alimentation magnétique, les deux troisièmes pôles statoriques étant reliés magnétiquement à une première extrémité d'un bras statorique dont la seconde extrémité est reliée magnétiquement auxdits premiers et deuxièmes moyens de guidage du flux magnétique, ledit bras statorique étant associé à des troisièmes moyens d'alimentation magnétique.

Selon d'autres caractéristiques du transducteur électromécanique selon l'invention, l'aimant permanent de chacun des deux rotors est bipolaire à aimantation radiale définissant un axe magnétique de cet aimant permanent, les aimants permanents des premier et deuxième rotors étant positionnés respectivement à l'intérieur des premier et deuxième trous statoriques.

De plus, afin de permettre une commande dans un mode pas-à-pas du transducteur électromécanique selon l'invention, il est prévu sur le bord des premier et deuxième trous statoriques des encoches de positionnement définissant pour l'aimant permanent de chacun des premier et deuxième rotors deux positions d'énergie minimale décalées angulairement de 180°.

Selon un mode de réalisation préféré de l'invention, le transducteur électromécanique est en outre agencé de manière que, lorsqu'un des aimants permanents est dans une de ses deux positions d'énergie minimale susmentionnées, la direction de l'axe magnétique de cet aimant permanent est alignée sur le deuxième pôle statorique définissant partiellement le trou statorique dans lequel cet aimant permanent est logé.

Selon un mode de réalisation particulier de l'invention, les premiers, deuxièmes et troisièmes moyens d'alimentation magnétique sont formés respectivement par des première, deuxième et troisième bobines.

Il résulte des caractéristiques du mode de réalisation préféré décrit ci-avant qu'il est aisé de commander indépendamment chacun des deux rotors du transducteur électromécanique selon l'invention dans les deux sens de rotation possibles à l'aide d'un procédé de commande faisant également l'objet de la présente invention.

Ce procédé de commande selon l'invention est caractérisé en ce qu'il est prévu pour entraîner en rotation le premier rotor, tout en laissant le deuxième rotor dans une de ses deux positions d'énergie minimale, dans un premier sens de rotation, uniquement l'alimentation des premiers moyens d'alimentation magnétique avec une alternance de la polarité du courant d'alimentation fourni à ces premiers moyens d'alimentation magnétique et, dans un second sens de rotation, l'alimentation des troisièmes moyens d'alimentation magnétique, avec une alternance de la polarité du courant d'alimentation fourni à ces troisièmes moyens d'alimentation magnétique, conjointement à l'alimentation des deuxièmes moyens d'alimentation magnétique de manière que le flux magnétique, résultant de l'alimentation de ces deuxièmes et troisièmes moyens d'alimentation magnétique et agissant sur le deuxième rotor, présente une direction de propagation globale, à l'intérieur du volume défini par l'aimant permanent de ce deuxième rotor, sensiblement parallèle à la direction de l'axe magnétique de cet aimant permanent lorsque ce dernier est positionné dans l'une de ses deux positions d'énergie minimale.

Il résulte du transducteur électromécanique et du procédé de commande susmentionnés un transducteur électromécanique comprenant deux rotors pouvant être commandés indépendamment l'un de l'autre dans les deux sens de rotation possibles à l'aide de seulement trois moyens d'alimentation magnétique, en particulier de trois bobines.

D'autres avantages de la présente invention seront mieux décrits à l'aide de la description suivante faite en référence aux dessins annexés, donnés à titre nullement limitatif, dans lesquels :
La figure 1 est une vue de dessus d'un premier mode de réalisation d'un transducteur électromécanique selon l'invention;
Les figures 2 à 9 sont des représentations schématiques du transducteur de la figure 1 servant à expliquer le fonctionnement magnétique de ce transducteur commandé selon le procédé de commande de la présente invention;

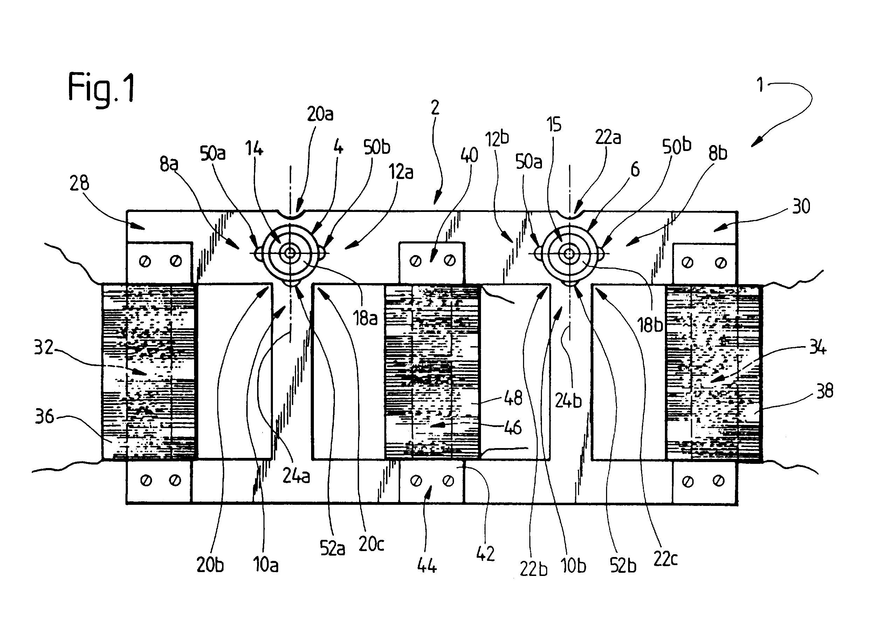

A l'aide de la figure 1, on décrira ci-après un premier mode de réalisation d'un transducteur électromécanique selon la présente invention.

Sur cette figure 1, le transducteur électromécanique 1 comprend un stator 2 définissant un premier trou statorique 4 et un deuxième trou statorique 6. Plus particulièrement, chacun de ces premier et deuxième trous statoriques 4 et 6 est défini par un premier pôle statorique 8a, 8b, un deuxième pôle statorique 10a, 10b et un troisième pôle statorique 12a, 12b.

Le transducteur électromécanique 1 comporte également un premier rotor 14 et un deuxième rotor 15 traversant respectivement le premier trou statorique 4 et le deuxième trou statorique 6. Chacun de ces premier et deuxième rotors 14 et 15 comporte un aimant permanent 18a, 18b situé à l'intérieur du trou statorique respectif 4, 6, les aimants permanents 18a et 18b étant ainsi couplés magnétiquement au stator 2.

Les trois pôles statoriques 8a, 10a et 12a sont magnétiquement isolés l'un de l'autre par des zones de haute réluctance magnétique formant isthmes 20a, 20b et 20c. De même, les trois pôles statoriques 8b, 10b et 12b sont isolés magnétiquement l'un de l'autre par des zones de haute réluctance magnétique formant isthmes 22a, 22b et 22c. Les premier et troisième pôles statoriques 8a et 12a, respectivement 8b et 12b, définissent un angle au centre du rotor 14, respectivement 15, d'environ 135°. Le deuxième pôle statorique 10a, respectivement 10b, définit un angle au centre du rotor 14, respectivement 15, d'environ 90°. Dans une variante de réalisation (non-représentée), chacun des pôles statoriques 8a, 8b, 10a, 10b, 12a et 12b définit un angle au centre de 120°.

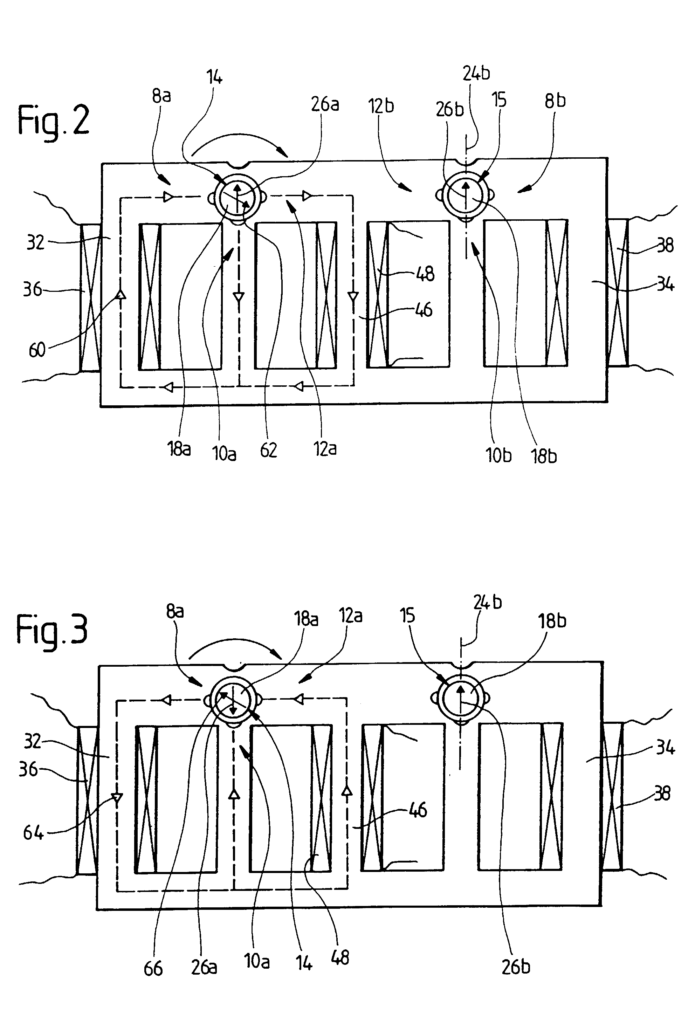

L'agencement particulier des pôles statoriques définissant les trous statoriques 4 et 6 définit une symétrie axiale dans le plan du stator pour chacune des deux régions entourant respectivement les trous statoriques 4 et 6, l'axe de cette symétrie axiale étant désignée par la référence 24a, respectivement 24b. Les aimants permanents 18a et 18b sont bipolaires à aimantation radiale et possèdent ainsi chacun un axe magnétique 26a, 26b (représentés sur les figures 2 à 9). De ce fait et étant donné la symétrie axiale susmentionnée, chacun de ces aimants permanents 18a et 18b possède deux positions d'énergie minimale lorsque le transducteur n'est pas alimenté en courant. Les axes magnétiques 26a et 26b de ces deux aimants permanents 18a et 18b présentent respectivement des directions parallèles aux axes de symétrie 24a et 24b lorsque chacun des aimants permanents 18a et 18b se trouve dans l'une de ses deux positions d'énergie minimale.

Le premier pôle statorique 8a et le deuxième pôle statorique 10a sont reliés magnétiquement l'un à l'autre par des moyens 28 de guidage du flux magnétique. De même, le premier pôle statorique 8b et le deuxième pôle statorique 10b sont reliés magnétiquement l'un à l'autre par des moyens 30 de guidage du flux magnétique. Les moyens 28 et 30 de guidage du flux magnétique forment respectivement un premier circuit magnétique et un deuxième circuit magnétique du transducteur électromécanique.

Les moyens 28 et 30 de guidage du flux magnétique comprennent respectivement un noyau 32 et un noyau 34 autour desquels sont respectivement enroulées une première bobine 36 et une deuxième bobine 38. Les troisièmes pôles 12a et 12b sont reliés magnétiquement à une première extrémité 40 d'un bras statorique 42 de faible réluctance magnétique. La seconde extrémité 44 de ce bras statorique 42 est reliée magnétiquement aux premiers moyens 28 de guidage du flux magnétique et également aux deuxièmes moyens 30 de guidage du flux magnétique. Le bras statorique 42 comporte un noyau 46 autour duquel est enroulée une bobine 48.

On notera que, de manière avantageuse, il est prévu sur le bord de chacun des deux trous statoriques 4 et 6 deux encoches de positionnement 50a et 50b diamétralement opposées l'une à l'autre relativement à l'axe de symétrie 24a, respectivement 24b. Ces encoches de positionnement 50a et 50b servent à engendrer un couple de positionnement de l'aimant permanent 18a, respectivement 18b.

On notera encore que l'axe magnétique 26a, 26b de l'aimant permanent 18a, 18b est aligné sur le deuxième pôle statorique 10a, 10b lorsque le rotor 14, 15 est dans l'une de ses deux positions d'énergie minimale.

Sur la figure 1 a encore été prévue une encoche 52a, 52b sur le bord du trou statorique 4, 6. Cette encoche sert à équilibrer les forces d'attraction exercées sur l'aimant permanent 18a, 18b par les pôles statoriques 8a, 10a et 12a, respectivement 8b, 10b et 12b. On remarquera qu'une telle encoche n'est pas essentielle au bon fonctionnement du transducteur électromécanique selon l'invention.

En se référant ci-après aux figures 2 à 9, on décrira un procédé de commande selon l'invention du transducteur électromécanique décrit ci-avant. Les figures 2 à 9 sont des représentations schématiques du transducteur électromécanique de la figure 1 dans lesquelles l'ensemble du stator 2 est représenté en projection dans un seul et même plan, alors que le stator du transducteur électromécanique 1 de la figure 1 s'étend essentiellement sur deux plans parallèles pour permettre la fixation des noyaux 32, 34 et 46 portant respectivement les bobines 36, 38 et 48 au reste du stator.

Cette représentation schématique simplifiée du transducteur électromécanique 1 de la figure 1 est avantageuse pour décrire de manière claire et correcte le fonctionnement magnétique de ce transducteur électromécanique lorsque ce dernier est commandé selon le procédé de commande qui va être maintenant décrit.

Le procédé de commande selon l'invention permet de commander indépendamment chacun des deux rotors 14 et 15 du transducteur électromécanique 1 (figure 1) dans les deux sens de rotation possibles. Sur les figures 2 à 9 n'ont été représentés que les aimants permanents 18a et 18b appartenant respectivement aux deux rotors 14 et 15. L'axe magnétique 26a de l'aimant permanent bipolaire 18a est représenté par une première flèche et l'axe magnétique 26b de l'aimant permanent bipolaire 18b est représenté par une deuxième flèche.

Sur les figures 2 à 9, seules les références nécessaires à la description du procédé de commande selon l'invention ont été mentionnées. Les références déjà décrites lors de la description de la figure 1 ne seront pas à nouveau décrites ici en détail.

Sur les figures 2 et 3 est représenté schématiquement le procédé de commande pour entraîner en rotation uniquement le rotor 14 dans le sens négatif, tout en laissant le rotor 15 dans une de ses deux positions d'énergie minimale.

Par sens négatif pour la rotation d'un rotor, il est compris une rotation dans le sens de marche des aiguilles d'une montre. Ainsi, par sens positif de rotation, il est compris par la suite une rotation dans le sens inverse au sens de marche des aiguilles d'une montre.

Pour entraîner le rotor 14 de la première position d'énergie minimale dans laquelle il est représenté sur la figure 2 à sa seconde position d'énergie minimale dans laquelle il est représenté sur la figure 3, il est prévu d'alimenter la bobine 36 à l'aide d'un courant d'alimentation ayant une première polarité de manière à engendrer dans le noyau 32 un flux magnétique 60. Ce flux magnétique 60 engendré par la bobine 36 entre dans le volume défini par l'aimant permanent 18a par le premier pôle magnétique 8a pour en ressortir à parts sensiblement égales par les deuxième et troisième pôles statoriques 10a et 12a.

La direction de propagation globale du flux magnétique 60 dans le volume défini par l'aimant permanent 18a correspond sensiblement à la direction représentée sur la figure 2 par la flèche 62. Le flux magnétique 60 traversant l'aimant permanent 18a engendre alors un moment de force sur cet aimant permanent 18a de manière à l'entraîner en rotation jusqu'à sa seconde position d'énergie minimale.

Ensuite, pour entraîner le rotor 14, toujours dans le sens négatif, de la seconde position d'énergie minimale représentée sur la figure 3 à la première position d'énergie minimale représentée sur la figure 2, il est prévu d'alimenter la bobine 36 avec un courant d'alimentation ayant une deuxième polarité inverse à ladite première polarité. Il résulte de cette alimentation un flux magnétique 64 dans le noyau 32. Ce flux magnétique 64 se propage dans le stator pour arriver dans le volume défini par l'aimant permanent 18a, à parts sensiblement égales, depuis les deuxième et troisième pôles statoriques 10a et 12a et ressortir de ce volume par le premier pôle statorique 8a.

La direction de propagation globale du flux magnétique 64 traversant le volume défini par l'aimant permanent 18a est représenté sur la figure 3 par la flèche 66. Le flux magnétique 64 traversant l'aimant permanent 18a engendre un moment de force sur cet aimant permanent 18a servant à faire tourner le rotor 14 de la seconde position d'énergie minimale représentée sur la figure 3 à la première position d'énergie minimale représentée sur la figure 2.

Ainsi, en alimentant la bobine 36 avec un courant d'alimentation présentant une alternance de polarité, il est possible de faire tourner le rotor 14 par pas de 180° dans un sens négatif de rotation, sans entraîner en rotation le rotor 15.

Le fait que le rotor 15 n'est pas entraîné en rotation simultanément au rotor 14 résulte de l'agencement du stator du transducteur électromécanique selon l'invention. En effet, aucun circuit magnétique principal ne traverse le volume défini par l'aimant permanent 18b du rotor 15 lorsque la bobine 36 est alimentée. Seuls des flux magnétiques secondaires négligeables traversent l'aimant permanent 18b étant donné la grande perméance magnétique du bras statorique 42.

On notera ici que sur les figures 2 à 9, seules les propagations dans les circuits magnétiques principaux d'un flux magnétique quelconque, engendré par l'une des trois bobines 36, 38 et 48, sont représentées à l'aide de traits tirés et de flèches indiquant la direction de propagation de ce flux magnétique.

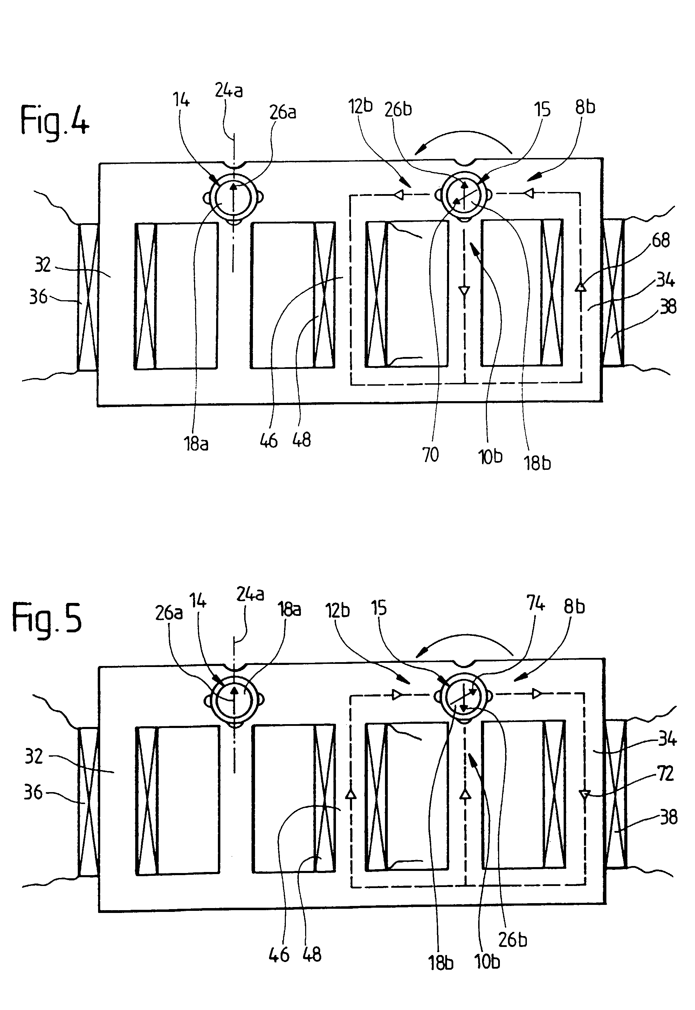

Le transducteur électromécanique selon l'invention présentant une symétrie, il s'en suit que l'entraînement en rotation du rotor 15 dans un sens positif est effectué de manière analogue à l'entraînement en rotation du rotor 14 dans un sens négatif, ce qui est représenté sur les figures 4 et 5.

Sur ces figures 4 et 5 est représenté schématiquement le procédé de commande pour entraîner en rotation uniquement le rotor 15 dans le sens positif, tout en laissant le rotor 14 dans une de ses deux positions d'énergie minimale.

Pour entraîner le rotor 15 de sa première position d'énergie minimale dans laquelle il est représenté sur la figure 4 à sa seconde position d'énergie minimale dans laquelle il est représenté à la figure 5, il est prévu d'alimenter la bobine 38 à l'aide d'un courant d'alimentation ayant une première polarité de manière à engendrer un flux magnétique 68 dans le noyau 34 de cette bobine 38. Ce flux magnétique 68 entre dans le volume défini par l'aimant permanent 18b par le premier pôle statorique 8b et ressort de ce volume à parts sensiblement égales par les deuxième et troisième pôles statoriques 10b et 12b. La direction globale du flux magnétique 68 traversant l'aimant permanent 18b est représentée par la flèche 70.

Ensuite, pour entraîner en rotation le rotor 15 de sa seconde position d'énergie minimale à sa première position d'énergie minimale, il est prévu d'alimenter la bobine 38 avec un courant d'alimentation présentant une deuxième polarité opposée à ladite première polarité de manière à engendrer un flux magnétique 72 dans le noyau 34. Ce flux magnétique 72 entre dans le volume défini par l'aimant permanent 18b, à parts sensiblement égales, par les deuxième et troisième pôles statoriques 10b et 12b pour en ressortir par le premier pôle statorique 8b. La direction globale du flux magnétique traversant l'aimant permanent 18b du rotor 15 est représentée sur la figure 5 par la flèche 74.

Les flux magnétiques 68 et 72 traversant l'aimant permanent 18b engendrent alternativement un moment de force entraînant en rotation le rotor 15 par pas de 180°.

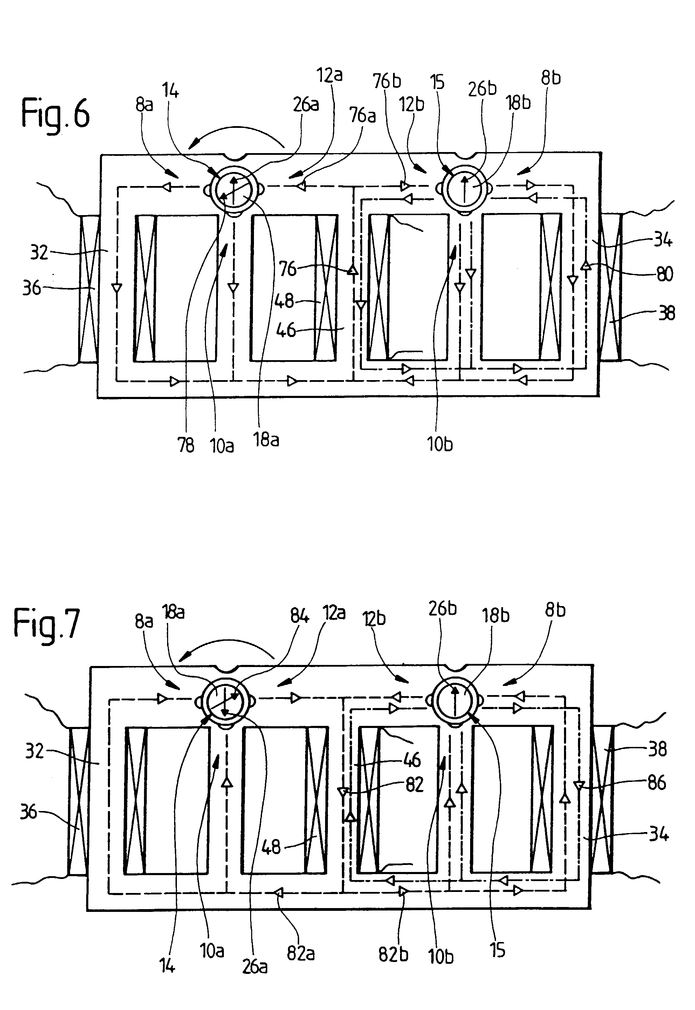

Sur les figures 6 et 7 est représenté schématiquement le procédé de commande pour entraîner en rotation uniquement le rotor 14 dans le sens positif, tout en laissant le rotor 15 dans une de ses deux positions d'énergie minimale.

Pour entraîner en rotation le rotor 14 depuis la première position d'énergie minimale dans laquelle il est représenté sur la figure 6 à sa seconde position d'énergie minimale dans laquelle il est représenté à la figure 7, il est prévu d'alimenter la bobine 48 avec un courant d'alimentation ayant une première polarité de manière à engendrer dans le noyau 46 portant cette bobine 48 un flux magnétique 76.

Le flux magnétique 76 engendré par la bobine 48 et sortant du noyau 46 par la première extrémité 40 du bras statorique 42 (figure 1) se sépare sensiblement à parts égales en deux flux magnétique 76a et 76b se propageant respectivement en direction du troisième pôle statorique 12a et du troisième pôle statorique 12b. Ainsi, l'aimant permanent 18a du rotor 14 est traversé par un flux magnétique 76a entrant par le troisième pôle statorique 12a et sortant, à parts sensiblement égales, par les premier et deuxième pôles statoriques 8a et 10a. La direction globale du flux magnétique 76a traversant l'aimant permanent 18a est représentée par la flèche 78. Il résulte de cette direction globale 78 du flux magnétique traversant l'aimant permanent 18a un moment de force entraînant le rotor 14 en rotation depuis sa première position d'énergie minimale jusqu'à sa seconde position d'énergie minimale.

Afin de neutraliser l'effet du flux magnétique 76b sur l'aimant permanent 18b du rotor 15, il est prévu selon l'invention d'alimenter la bobine 38 avec un courant d'alimentation dont la polarité est choisie pour que la direction du flux magnétique 80, engendrée par cette bobine 38 dans le noyau 34, présente une direction de propagation dans le premier pôle statorique 8b opposée à la direction du flux magnétique 76b se propageant dans ce premier pôle statorique 8b. De plus, le potentiel magnétique engendré par la bobine 38 est avantageusement égal à la moitié du potentiel magnétique engendré par la bobine 48 de manière à ce que la bobine 38 exerce sur le rotor 15 un couple opposé à celui engendré par la bobine 48. Dans le cas d'une commande en courant, on remarquera qu'il a y proportionalité entre le potentiel magnétique et le courant électrique. Dans le cas d'une commande en tension, on peut agir sur le taux de hachage des impulsions fournies à la bobine 38 et à la bobine 48.

Il résulte de l'agencement des trois pôles statoriques 8b, 10b et 12b et de la position angulaire des deux positions d'énergie minimale du rotor 15 que le flux résultant dans le volume de l'aimant permanent 18b, engendré par les flux magnétiques 76b et 80, présente une direction sensiblement parallèle à la direction de l'axe magnétique 26b lorsque l'aimant permanent 18b est dans l'une de ses deux positions d'énergie minimale. De ce fait, le moment de force exercé sur le rotor 15 est nul ou quasi nul et ce rotor 15 reste dans sa position d'énergie minimale initiale.

De même, pour entraîner en rotation dans un sens positif le rotor 14 depuis sa seconde position d'énergie minimale dans laquelle il est représenté sur la figure 7 jusqu'à sa première position d'énergie minimale dans laquelle il est représenté sur la figure 6, la bobine 48 est alimenté par un courant d'alimentation ayant une deuxième polarité opposée à ladite première polarité. Dans ce cas, la bobine 48 engendre dans le noyau 46 un flux magnétique 82. Ce flux magnétique 82 sort du bras polaire 42 par sa seconde extrémité 44 (figure 1) en se partageant, à parts sensiblement égales, en deux flux magnétiques 82a et 82b.

Le flux magnétique 82a pénètre dans le volume défini par l'aimant permanent 18a du rotor 14 par les premier et deuxième pôles statoriques 8a et 10a pour sortir de ce volume par le troisième pôle statorique 12a. La direction du flux magnétique 82a traversant l'aimant permanent 18a est alors représentée par la flèche 84. Le flux magnétique 82a traversant l'aimant permanent 18a engendre un moment de force servant à entraîner en rotation le rotor 14 de sa seconde position d'énergie minimale à sa première position d'énergie minimale.

A nouveau, afin de neutraliser l'influence du flux magnétique 82b sur le rotor 15, il est prévu d'alimenter la bobine 38 avec un courant d'alimentation engendrant dans le noyau 34 un flux magnétique 86 ayant dans ce noyau 34 un sens de propagation opposé au sens de propagation du flux magnétique 82b. De ce fait, la direction globale du flux magnétique résultant des flux magnétiques 82b et 86 et traversant l'aimant permanent 18b est sensiblement parallèle à la direction de l'axe magnétique 26b de l'aimant permanent 18b lorsque ce dernier est dans l'une de ses deux positions d'énergie minimale. Ainsi, le rotor 15 n'est pas entraîné en rotation.

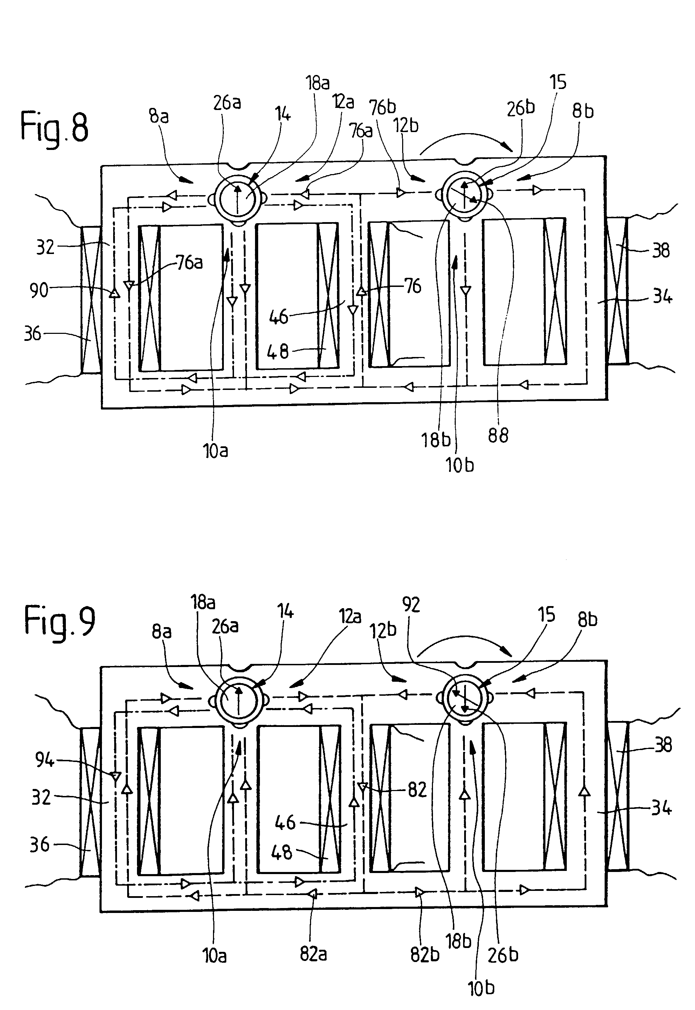

Sur les figures 8 et 9 est représenté schématiquement le procédé de commande pour entraîner en rotation uniquement le rotor 15 dans le sens négatif, tout en laissant le rotor 14 dans une de ses deux positions d'énergie minimale.

Etant donné l'agencement symétrique du transducteur électromécanique selon l'invention, le procédé de commande représenté schématiquement à l'aide des figures 8 et 9 est similaire au procédé de commande décrit ci-avant à l'aide des figures 6 et 7.

La bobine 48 est alimentée avec un courant ayant une première polarité pour engendrer dans le noyau 46 un flux magnétique 76 décrit précédemment, lequel se partage en deux flux magnétiques 76a et 76b. Le flux magnétique 76b pénètre dans le volume défini par l'aimant permanent 18b par le troisième pôle statorique 12b pour ressortir de ce volume par les premier et deuxième pôles statoriques 8b et 10b. La direction globale du flux magnétique traversant l'aimant permanent 18b est représentée sur la figure 8 par la flèche 88. Le flux magnétique traversant l'aimant permanent 18b engendre un moment de force servant à entraîner en rotation dans le sens négatif le rotor 15 de sa première position d'énergie minimale dans laquelle il est représenté sur la figure 8 à sa seconde position d'énergie minimale dans laquelle il est représenté sur la figure 9.

Pour neutraliser le flux magnétique 76a agissant sur l'aimant permanent 18a du rotor 14, il est prévu selon l'invention d'alimenter la bobine 36 de manière à engendrer dans le noyau 32 un flux magnétique 90. La direction du flux magnétique 90 se propageant dans le noyau 32 est de sens opposé au flux magnétique 76a se propageant dans ce noyau 32. A nouveau, le potentiel magnétique de la bobine 36 est choisi de manière que l'intensité du flux magnétique 90 traversant l'aimant permanent 18a est sensiblement égale à l'intensité du flux magnétique 76a traversant également cet aimant permanent 18a. La direction globale du flux magnétique résultant des flux magnétiques 76a et 90 et traversant l'aimant permanent 18a est sensiblement parallèle à la direction de l'axe magnétique 26a lorsque le rotor 14 est dans l'une de ses deux positions d'énergie minimale. De ce fait, ce rotor 14 n'est pas entraîné en rotation.

Pour entraîner en rotation dans le sens négatif le rotor 15 depuis sa seconde position d'énergie minimale à sa première position d'énergie minimale, il est prévu d'alimenter la bobine 48 de telle manière qu'elle engendre dans le noyau 46 un flux magnétique 82 qui se partage en deux flux magnétiques 82a et 82b comme cela a été décrit précédemment. Le flux magnétique 82b, entrant dans le volume défini par l'aimant permanent 18b par les premier et deuxième pôles statoriques 8b et 10b et sortant de ce volume par le troisième pôle statorique 12b, présente à l'intérieur dudit volume une direction de propagation globale représentée par la flèche 92. Le flux magnétique 82b traversant l'aimant permanent 18b engendre un moment de force entraînant en rotation le rotor 15 de sa seconde position d'énergie minimale à sa première position d'énergie minimale.

Pour neutraliser l'influence du flux magnétique 82a traversant l'aimant permanent 18a du rotor 14, il est prévu d'alimenter la bobine 36 de manière à ce que cette dernière engendre dans le noyau 32 un flux magnétique 94 ayant un sens de propagation opposé au sens de propagation du flux magnétique 82a traversant ce noyau 32. La bobine 36 est alimentée de manière que l'intensité du flux magnétique 94 traversant l'aimant permanent 18a présente une intensité sensiblement égale à l'intensité du flux magnétique 82a traversant cet aimant permanent 18a. Pour les raisons évoquées précédemment, aucune force n'est exercée sur le rotor 14 et celui-ci n'est pas entraîné en rotation.

La présente invention permet donc d'entraîner en rotation deux rotors de manière indépendante et dans les deux sens de rotation possibles à l'aide d'un transducteur électromécanique comprenant un seul stator et seulement trois bobines. On remarquera qu'il est également possible d'entraîner en rotation simultanément les deux rotors 14 et 15 par une commande appropriée à la portée de l'homme du métier.

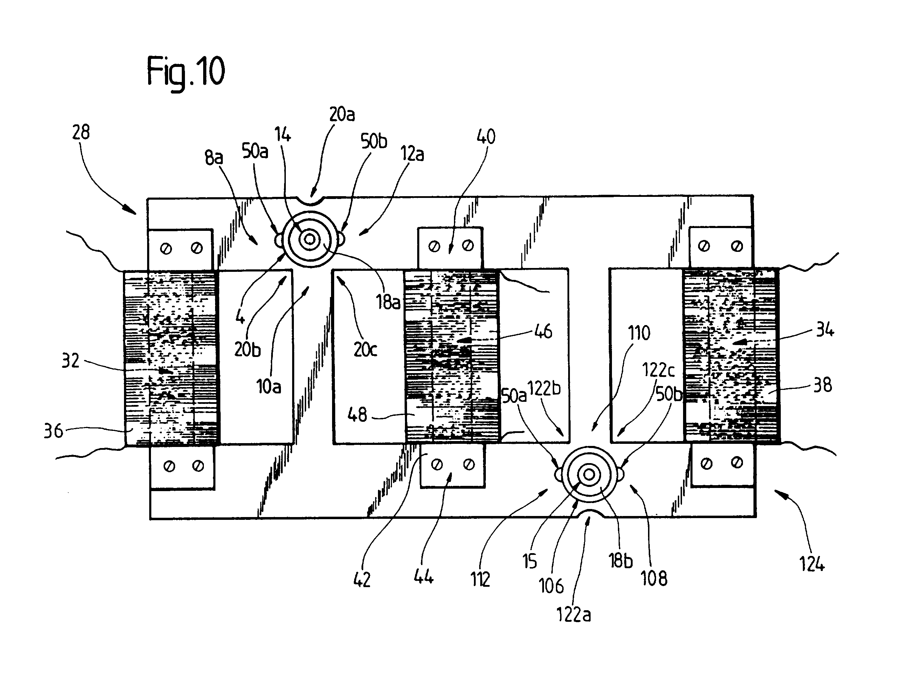

A l'aide de la figure 10, on décrira ci-après un deuxième mode de réalisation de l'invention.

Les références déjà décrites en détail lors de la description du premier mode de réalisation ne seront pas à nouveau décrites ici.

Ce deuxième mode de réalisation diffère du premier mode de réalisation en ce que l'aimant permanent 18b du deuxième rotor 15 est situé dans un trou statorique 106, défini par un premier pôle statorique 108, un deuxième pôle statorique 110 et un troisième pôle statorique 112, et en ce que le trou statorique 6 du premier mode de réalisation n'est pas prévu dans ce deuxième mode de réalisation.

Les trois pôles statoriques 108, 110 et 112 sont magnétiquement isolés l'un de l'autre par des zones de haute réluctance magnétique formant isthmes 122a, 122b et 122c.

Le premier pôle statorique 108 et le deuxième pôle statorique 110 sont reliés magnétiquement l'un à l'autre par des moyens 124 de guidage du flux magnétique comportant le noyau 34 autour duquel est enroulé la bobine 38. Le troisième pôle magnétique 112 est relié magnétiquement à la seconde extrémité 44 du bras statoriques 42, alors que la première extrémité 40 de ce bras statorique 42 est reliée magnétiquement aux moyens 124 de guidage du flux magnétique.

Le fonctionnement du transducteur selon ce deuxième mode de réalisation est semblable à celui décrit ci-avant pour le premier mode de réalisation de l'invention. Cependant, ce deuxième mode de réalisation présente un avantage en ce qui concerne la consommation électrique du transducteur dans le cas où celui-ci est utilisé comme moteur à entraînement direct de deux aiguilles d'une pièce d'horlogerie. Ceci résulte du fait que le rotor 14 et le rotor 15 peuvent être entraînés dans le sens conventionnel des aiguilles d'une montre (sens négatif ou inverse du sens trigonométrique) respectivement au seul moyen de la bobine 36 et de la bobine 38 en alimentation.

On notera toutefois que chacun des rotors 14 et 15 du premier mode de réalisation et du deuxième mode de réalisation peut être commandé de diverses manières à la portée de l'homme du métier, notamment avec les trois bobines 36, 38 et 48 en alimentation.

## Revendications

1. Transducteur électromécanique comprenant :
- un stator définissant un premier trou statorique (4) et un deuxième trou statorique (6;106),
- un premier rotor (14) et un deuxième rotor (15) traversant respectivement lesdits premier et deuxième trous statoriques, chacun de ces premier et deuxième rotors comportant un aimant permanent (18a,18b) couplé magnétiquement audit stator,
ce transducteur électromécanique étant caractérisé en ce que chacun des premier et deuxième trous statoriques est défini par un premier pôle statorique (8a,8b;108), un deuxième pôle statorique (10a, 10b;110) et un troisième pôle statorique (12a,12b;112), lesdits premier et deuxième pôles statoriques définissant partiellement ledit premier trou statorique étant reliés magnétiquement par des premiers moyens (28) de guidage du flux magnétique, lesdits premier et deuxième pôles statoriques définissant partiellement ledit deuxième trou statorique étant reliés magnétiquement par des deuxièmes moyens (30;124) de guidage du flux magnétique, lesdits premiers et deuxièmes moyens de guidage du flux magnétique étant respectivement associés à des premiers et des deuxièmes moyens d'alimentation magnétique (36, 38), ledit transducteur électromécanique comprenant en outre un bras statorique (42) de faible réluctance magnétique ayant une première extrémité (40) et une seconde extrémité (44), ce bras statorique étant associé à des troisièmes moyens d'alimentation magnétique (48), ledit troisième pôle statorique (12a) définissant partiellement ledit premier trou statorique (4) étant relié magnétiquement à la première extrémité dudit bras statorique et lesdits premiers moyens (28) de guidage du flux magnétique étant reliés magnétiquement à la seconde extrémité de ce bras statorique, ledit troisième pôle statorique (12b;112) définissant partiellement ledit deuxième trou statorique (6;106) étant relié magnétiquement à la première ou seconde extrémité dudit bras statorique et lesdits deuxièmes moyens (30;124) de guidage du flux magnétique étant reliés magnétiquement à l'autre extrémité de ce bras statorique.

2. Transducteur électromécanique selon la revendication 1, caractérisé en ce que l'aimant permanent (18a,18b) de chacun des premier et deuxième rotors (14,15) est bipolaire à aimantation radiale définissant un axe magnétique (26a,26b) de cet aimant permanent, lesdits aimants permanents des premier et deuxième rotors étant respectivement positionnés à l'intérieur desdits premier et deuxième trous statoriques (4,6;106), et en ce qu'il est prévu sur le bord de chacun desdits premier et deuxième trous statoriques des encoches de positionnement (50a, 50b) définissant pour ledit aimant permanent de chacun desdits premier et deuxième rotors deux positions d'énergie minimale décalées angulairement de 180°.

3. Transducteur électromécanique selon la revendication 2, caractérisé en ce que lesdits premiers, deuxièmes et troisièmes moyens d'alimentation magnétique (36, 38, 48) sont respectivement formés par une première bobine (36), une deuxième bobine (38) et une troisième bobine (48), lesdits premiers et deuxièmes moyens (28,30;124) de guidage du flux magnétique comprenant respectivement un premier noyau magnétique (32) et un deuxième noyau magnétique (34) autour desquels sont respectivement enroulées lesdites première et deuxième bobines, ledit bras statorique (42) comprenant un troisième noyau magnétique (46) autour duquel est enroulé ladite troisième bobine.

4. Transducteur électromécanique selon la revendication 2 ou 3, caractérisé en ce que, lorsque ledit aimant permanent (18a,18b) de l'un desdits premier et deuxième rotors est dans une de ses deux positions d'énergie minimale, la direction dudit axe magnétique (26a,26b) de cet aimant permanent est sensiblement alignée sur le deuxième pôle statorique (10a,10b;110) définissant partiellement ledit premier ou deuxième trou statorique (4,6;106) dans lequel cet aimant permanent est situé.

5. Procédé de commande d'un transducteur électromécanique selon l'une des revendications 2 à 4, caractérisé en ce qu'il est prévu pour entraîner en rotation le premier rotor (14), tout en laissant le deuxième rotor (15) dans une de ses deux positions d'énergie minimale, dans un premier sens de rotation uniquement l'alimentation des premiers moyens d'alimentation magnétique (36) avec une alternance de la polarité du courant d'alimentation fourni à ces premiers moyens d'alimentation magnétique et, dans un second sens de rotation, l'alimentation des troisièmes moyens d'alimentation magnétique, avec une alternance de la polarité du courant d'alimentation fourni à ces troisièmes moyens d'alimentation magnétique, conjointement à l'alimentation des deuxièmes moyens d'alimentation magnétique de manière que le flux magnétique, résultant de l'alimentation de ces deuxièmes et troisièmes moyens d'alimentation magnétique, présente une direction de propagation globale, à l'intérieur du volume défini par l'aimant permanent (18b) du deuxième rotor, sensiblement parallèle à la direction dudit axe magnétique (26b) de cet aimant permanent lorsque ce dernier est positionné dans l'une de ses deux positions d'énergie minimale.

## Claims

1. Electromechanical transducer comprising :
- a stator defining a first stator hole (4) and a second stator hole (6;106),
- a first rotor (14) and a second rotor (15) traversing respectively said first and second stator holes, each of said first and second rotors comprising a permanent magnet (18a,18b) magnetically coupled to said stator,
such electromechanical transducer being characterized in that each of said first and second stator holes is defined by a first stator pole (8a,8b;108), a second stator pole (10a,10b;110) and a third stator pole (12a,12b;112), said first and second stator poles partially defining said first stator hole being magnetically coupled by first means (28) for guiding the magnetic flow, said first and second stator poles partially defining said second stator hole being magnetically coupled by second magnetic flow guiding means (30;124), said first and second magnetic flow guiding means being respectively coupled with first and second magnetic supply means (36,38), said electromechanical transducer also comprising a stator arm (42) of low magnetic reluctance having a first end (40) and a second end (44), said stator arm being coupled with third magnetic supply means (48), said third stator pole (12a) partially defining said first stator hole (4) being magnetically coupled to the first end of said stator arm and said first magnetic flow guiding means (28) being magnetically coupled to the second end of said stator arm, said third stator pole (12b;112) partially defining said second stator hole (6,106) being magnetically coupled to said first or second end of said stator arm and said second magnetic flow guiding means (30;124) being magnetically coupled to the other end of said stator arm.

2. Electromechanical transducer according to claim 1, characterized in that said permanent magnet (18a,18b) of each of said first and second rotors (14,15) is bipolar with radial magnetisation defining a magnetic axis (26a,26b) of said permanent magnet, said permanent magnets of the first and second rotors being positioned respectively inside said first and second stator holes (4,6;106), and in that positioning notches (50a,50b) are provided on the edges of each of said first and second stator holes defining for said permanent magnet of each of said first and second rotors two minimum energy positions staggered at an angle of 180°.

3. Electromechanical transducer according to claim 2, characterized in that said first, second and third magnetic supply means (36,38,48) are formed respectively by a first coil (36), a second coil (38) and a third coil (48), said first and second magnetic flow guiding means (28,30;124) comprising respectively a first magnetic core (32) and a second magnetic core (34) around which are respectively wound said first and second coils, said stator arm (42) comprising a third magnetic core (46) around which is wound said third coil.

4. Electromechanical transducer according to claim 2 or 3, characterized in that, when said permanent magnet (18a,18b) of one of said first and second rotors is in one of its two minimum energy positions, the direction of said magnetic axis (26a,26b) this said permanent magnet is substantially aligned with the second stator pole (10a, 10b;110) partially defining said first or second stator hole (4,6;106) in which this permanent magnet is situated.

5. Control method for an electromechanical transducer according to one of claims 2 to 4, characterized in that all that is provided for driving the first rotor (14) in rotation in a first rotational direction, while leaving the second rotor (15) in one of its two minimum energy positions, is only the supply of first magnetic supply means (36) with an alternation of polarity of the supply current provided to said first magnetic supply means and, in a second rotational direction, the supply of third magnetic supply means, with of alternation in polarity of the supply current provided to said third magnetic supply means, jointly with the supply of second magnetic supply means so that the magnetic flow, resulting from the supply of said second and third magnetic supply means, has a global propagation direction, inside the volume defined by the permanent magnet (18b) of said second rotor, substantially parallel to the direction of said magnetic axis (26b) of said permanent magnet when the latter is positioned in one of its two minimum energy positions.

## Patentansprüche

1. Elektromechanischer Wandler, umfassend:
- einen ein erstes Statorloch (4) und ein zweites Statorloch (6; 106) begrenzenden Stator,
- einen ersten Rotor (14) und einen zweiten Rotor (15), die das erste bzw. zweite Statorloch durchsetzen, welcher erste und zweite Rotor jeweils einen mit dem Stator magnetische gekoppelten Permanentmagneten (18a, 18b) umfassen, welcher elektromechanische Wandler dadurch gekennzeichnet ist, daß jedes der ersten und zweiten Statorlöcher von einem ersten Statorpol (8a, 8b; 108), einem zweiten Statorpol (10a, 10b, 110) und einem dritten Statorpol (12a, 12b, 112) begrenzt ist, welche ersten und zweiten teilweise das erste Statorloch begrenzenden Statorpole magnetisch über erste Magnetflußführungsmittel (28) verbunden sind, welche ersten und zweiten teilweise das zweite Statorloch begrenzenden Statorpole magnetisch über zweite Magnetflußführungsmittel (30; 124) verbunden sind, welche ersten bzw. zweiten Magnetflußführungsmittel ersten bzw. zweiten Magnetspeisemitteln (36, 38) zugeordnet sind, welcher elektromechanische Wandler ferner einen Statorarm (42) niedriger magnetischer Reluktanz mit einem ersten Ende (40) und einem zweiten Ende (44) umfaßt, welcher Statorarm dritten Magnetspeisemitteln (48) zugeordnet ist, welcher dritte teilweise das erste Statorloch (4) begrenzende Statorpol (12a) magnetisch mit dem ersten Ende des Statorarms verbunden ist und welche ersten Magnetflußführungsmittel (28) magnetisch mit dem zweiten Ende dieses Statorarms verbunden sind, welcher dritte teilweise das zweite Statorloch (6, 106) begrenzende Statorpol (12b; 112)) magnetisch mit dem ersten oder zweiten Ende des Statorarms verbunden ist und welche zweiten Magnetflußführungsmittel (30; 124) magnetisch mit dem anderen Ende dieses Statorarms verbunden sind.

2. Elektromechanischer Wandler nach Anspruch 1, dadurch gekennzeichnet, daß der Permanentmagnet (18a, 18b) jedes der ersten und zweiten Rotoren (14, 15) bipolar radial unter Definition einer magnetischen Achse (26a, 26b) dieses Permanentmagneten magnetisiert ist, welche Permanentmagneten des ersten und zweiten Rotors im Innern des ersten bzw. zweiten Statorlochs (4, 6; 106) positioniert sind, und daß am Rand jedes ersten und zweiten Statorlochs Positionierausschnitte (50a, 50b) vorgesehen sind, die für den Permanentmagneten jedes der ersten und zweiten Rotoren zwei um 180° versetzte Positionen minimaler Energie definieren.

3. Elektromechanischer Wandler nach Anspruch 2, dadurch gekennzeichnet, daß die ersten,. zweiten und dritten Magnetspeisemittel (36, 38, 48) von einer ersten Spule (36), einer zweiten Spule (38) bzw. einer dritten Spule (48) gebildet sind, welche ersten und zweiten Magnetflußführungsmittel (28, 30; 124) einen ersten Magnetkern (32) bzw. einen zweiten Magnetkern (34) umfassen, um die die erste bzw. zweite Spule gewickelt sind, welcher Statorarm (42) einen dritten Magnetkern (46) umfaßt, um den die dritte Spule gewickelt ist.

4. Elektromechanischer Wandler nach Anspruch 2 oder 3, dadurch gekennzeichnet, daß dann, wenn der Permanentmagnet (18a, 18b) eines der ersten und zweiten Rotoren in einer seiner beiden Positionen minimaler Energie ist, die Richtung der magnetischen Achse (26a, 26b) dieses Permanentmagneten im wesentlichen auf den zweiten Statorpol (10a, 10b; 110) ausgerichtet ist, der teilweise das erste oder zweite Statorloch (4, 6; 106) begrenzt, in welchem sich dieser Permanentmagnet befindet.

5. Verfahren zum Steuern eines elektromechanischen Wandlers nach einem der Ansprüche 2 bis 4, dadurch gekennzeichnet, daß für den Drehantrieb des ersten Rotors (14), unter Belassung des zweiten Rotors (15) in einer seiner beiden Positionen minimaler Energie, in einem ersten Drehsinn ausschließlich die Speisung der ersten Magnetspeisemittel (36) mit Strom alternierender Polarität, der diesen ersten Magnetspeisemitteln zugeführt wird, vorgesehen ist, und in einem zweiten Drehsinn die Speisung der dritten Magnetspeisemittel mit Strom alternierender Polarität, der diesen dritten Magnetspeisemitteln zugeführt wird, zusammen mit der Speisung der zweiten Magnetspeisemittel derart vorgesehen ist, daß der durch die Speisung dieser zweiten und dritten Magnetspeisemittel hervorgerufene Magnetfluß im Innern des von dem Permanentmagneten (18b) des zweiten Rotors begrenzten Volumens eine globale Ausbreitungsrichtung im wesentlichen parallel zu der Richtung der magnetischen Achse (26b) dieses Permanentmagneten hat, wenn dieser letztere in einer seiner beiden Positionen minimaler Energie ist.
